Europäisches Patentamt

European Patent Office

Office européen des brevets

(19)

(11) Veröffentlichungsnummer: **0 048 331**
**B1**

(12) **EUROPÄISCHE PATENTSCHRIFT**

(45) Veröffentlichungstag der Patentschrift:
**15.02.84**

(51) Int. Cl.³: **B 27 G 3/00,** B 27 G 19/02

(21) Anmeldenummer: **81106114.2**

(22) Anmeldetag: **05.08.81**

(54) **Bewegliche Schutzhaube für das angetriebene Werkzeug einer Werkzeugmaschine.**

(30) Priorität: **13.09.80 DE 3034665**

(43) Veröffentlichungstag der Anmeldung:
**31.03.82 Patentblatt 82/13**

(45) Bekanntmachung des Hinweises auf die Patenterteilung:
**15.02.84 Patentblatt 84/7**

(84) Benannte Vertragsstaaten:
**AT BE CH FR GB IT LI NL SE**

(56) Entgegenhaltungen:
**CH - A - 426 209**
**US - A - 3 945 281**
**US - A - 4 063 478**

(73) Patentinhaber: **Wilhelm Altendorf GmbH & Co. KG,**
**Wettiner Allee 45, D-4950 Minden (DE)**

(72) Erfinder: **Altendorf, Kurt, Immenstrasse 179,**
**D-4950 Minden (DE)**
Erfinder: **Thiele, Siegfried, Tannenweg 1, D-4950 Minden**
**(DE)**

(74) Vertreter: **Eisenführ & Speiser, Martinistrasse 24,**
**D-2800 Bremen 1 (DE)**

ACTORUM AG

Bewegliche Schutzhaube für das angetriebene Werkzeug einer Werkzeugmaschine.

Die Erfindung betrifft eine bewegliche Schutzhaube für das angetriebene Werkzeug einer Werkzeugmaschine, insbesondere für das Sägeblatt einer Tischkreissäge, mit einer Viergelenk-Parallellenker-Führung für den Haubenkörper und einem Anschlussstutzen für die Späne-Absaugung.

Die Parallelogrammführung des Haubenkörpers erlaubt, dass dessen Stellung unterschiedlichen Werkstückdicken unter planparalleler (Höhen-)Verschiebung der Aufstandsebene des Haubenkörpers angepasst werden kann. Dabei ist die Anordnung im allgemeinen so getroffen, dass infolge Federspannung der Gewichtsausgleich der Haubenkörper in jeder Höhe über dem Maschinentisch stehen bleibt.

Bei bekannten Anordnungen dieser Art ist der Anschlussstutzen für den Saugschlauch einer Späneabsaugung unmittelbar am Haubenkörper angebracht. Er behindert dadurch nicht nur die Beobachtung des Werkstücks unterhalb des Haubenkörpers, sondern auch das Durchschieben des Werkstücks am Parallelanschlag und seine Abnahme vom Maschinentisch. Ferner kollidiert die weitere Führung des Saugschlauches häufig mit anderen Aufbauten der Werkzeugmaschine.

Der Erfindung liegt daher die Aufgabe zugrunde, bei einer parallelogrammgeführten Schutzhaube der eingangs beschriebenen Art die Späneabsaugung so zu verbessern, dass sie die Führung und Handhabung der Schutzhaube im Betrieb nicht beeinträchtigen. Zur Lösung dieser Aufgabe ist erfindungsgemäss vorgesehen, dass ein Lenker der Viergelenk-Parallellenker-Führung als Kanal ausgebildet und sein eines Ende an den Innenraum des Haubenkörpers angeschlossen ist, während an seinem anderen Ende der Anschlussstutzen angeordnet ist. Infolge der Integration der Späneabsaugung in die Haubenkörper-Führung wird für die Leitung der Absaugluft im Bereich der Schutzhaube kein zusätzlicher Platz benötigt. Darüberhinaus fällt die unkontrollierbare Beeinflussung der Haubenkörper-Vorspannung durch einen unmittelbar am Haubenkörper angesetzten Absaugschlauch weg. Ein weiterer Vorteil der neuen Anordnung besteht darin, dass das Hohlprofil des Kanallenkers der Parallellenker-Führung eine hohe Stabilität verleiht.

Vorzugsweise ist der Kanallenker mittels eines Formstücks am Haubenkörper angeschlossen, welches mit diesem fest verbunden, aber am Kanal um den einen Drehpunkt des Viergelenks schwenkbar und abgedichtet gelagert ist. Der Kanallenker und das Formstück zusammen bilden dabei gewissermassen eine kurze und eine lange Seite des Parallelogramms. Dabei ist insbesondere vorgesehen, dass sowohl der Kanallenker als auch das Formstück einen im wesentlichen flachrechteckigen Querschnitt haben, wobei die langen Rechteck-Seitenwände gegeneinander abdichten, während am Kanallenker angesetzte Dichtungsstücke im Bereich der kurzen Rechteck-Seitenwände am Formstück dichtend anliegen. Durch schräges Anschneiden des Kanallenker-Hohlprofils lässt sich dies auf eine Weise bewerkstelligen, die bei unkomplizierter Formgebung des Formstücks nur einfache Abdichtmassnahmen im Bereich der kurzen Rechteck-Seitenwände des Kanallenkers erfordert.

Gemäss einer bevorzugten Weiterbildung der Erfindung ist am Formstück auch der andere Lenker drehbar gelagert, was die Präzision der Parallelführung erhöht und die Montage erleichtert. Der Haubenkörper kann dann – unabhängig von der Lenkerführung – lösbar am Formstück befestigt sein.

Weitere vorteilhafte Ausbildungen sind Gegenstände der übrigen Unteransprüche.

Die nachfolgende Beschreibung veranschaulicht die Erfindung an einem Ausführungsbeispiel anhand der Zeichnung. Darin zeigt:

Fig. 1 einen mittleren Längsschnitt durch die Schutzhaube;
Fig. 2 einen Schnitt gemäss der Linie II–II in Fig. 1 und
Fig. 3 eine Ansicht von vorn, in Richtung des Pfeiles A in Fig. 1.

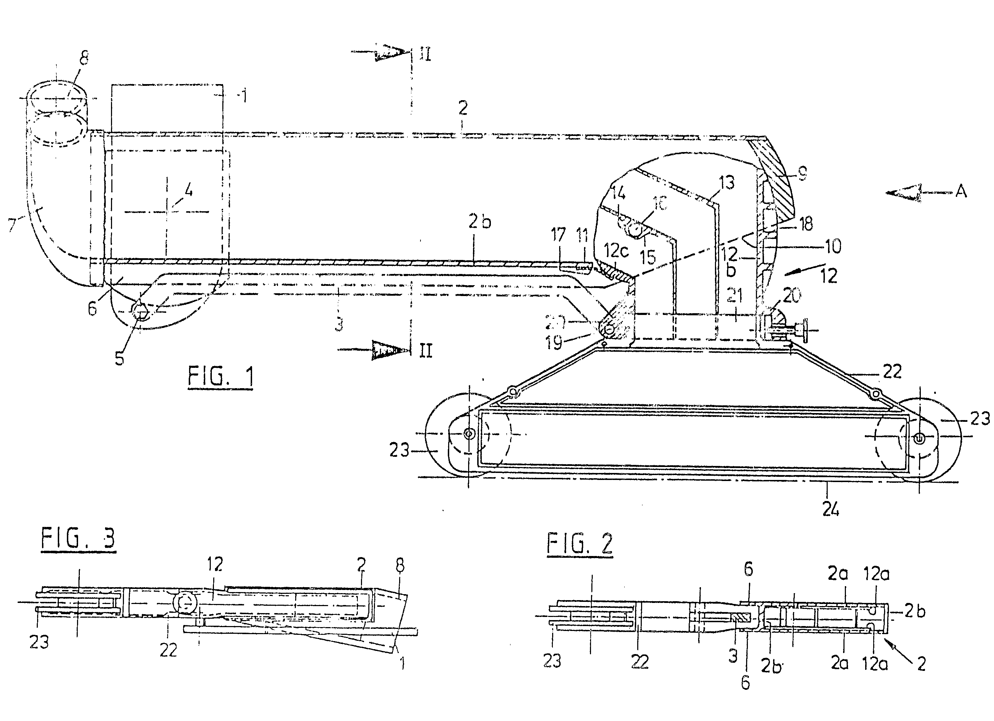

Das Ausführungsbeispiel stellt eine Schutzhaube einer Tischkreissäge dar. An einem ortsfest anzubringenden Schild 1 sind die beiden Lenker der Viergelenk-Parallellenker-Führung, nämlich der – nachfolgend noch näher beschriebene – Kanallenker 2 und der andere Lenker 3 um die Drehpunkte 4 bzw. 5 schwenkbar befestigt. Der Kanallenker 2 besteht aus einem Hohlprofil von flachem Rechteck-Querschnitt mit langen Seitenwänden 2a und kurzen Seitenwänden 2b. Im Bereich der dem anderen Lenker 3 zugewandten kurzen Seitenwand 2b setzen sich die langen Seitenwände 2a in Stegen 6 fort, welche mit der angrenzenden kurzen Seitenwand 2b ein U-Profil bilden (Fig. 2).

An seinem einen Ende, im Bereich des Schildes 1, ist das Rechteckprofil des Kanallenkers 2 senkrecht zu seiner Haubenachse abgeschnitten und von einer aufgeschobenen Kappe 7 verschlossen, welche einen angeformten Anschlussstutzen 8 für den Spiralschlauch der Späneabsaugung aufweist.

Am anderen Ende ist das Rechteckprofil des Kanallenkers 2 in der aus Fig. 1 ersichtlichen Weise schräg abgeschnitten, wobei die Schnittkante in einem Teilbereich der Seitenwände 2a der Aussenkontur eines Kunststoff-Dichtungsstücks 9 folgt. Diese Aussenkontur steht nahezu senkrecht auf der schrägen Schnittkante 10. Die dem anderen Lenker 3 zugekehrte kurze Seitenwand 2b ist in diesem Endbereich des Kanallenkers 2 durch Ausschneiden zurückversetzt; sie endet bei 11.

In diesen Endbereich des Kanallenkers 2 ist ein aus schlagfestem Kunststoff (Wz «Makrolon») hergestelltes Formstück 12 eingesetzt, welches ebenfalls einen im wesentlichen flachrechteckigen Querschnitt mit langen Seitenwänden 12a und kurzen Seitenwänden 12b aufweist. Die «innere» kurze Seitenwand 12b ist jedoch – wie Fig. 1 erkennen lässt – abgewinkelt, so dass ein nahezu stossfreier Übergang zu der dem anderen Lenker 3 benachbarten kurzen Seitenwand 2b des Kanallenkers 2 entsteht. In etwa gleicher Weise abgewinkelt sind zwei im Inneren des Formkörpers 12 parallel zu dessen kurzen Seitenwänden 12b angeordnete Leitstege 13, welche die Führung der Absaugluft verbessern und ein Zusammenballen der abgesaugten Holzspäne im Bereich der Umlenkung verhüten. Eine Verdikkung 14 des einen Leitstegs 13 dient zur Aufnahme des Schwenkzapfens 15, dessen Drehachse 16 den einen der beiden Drehpunkte an diesem Ende des Lenker-Parallelogramms bildet. Eine an der benachbarten kurzen Seitenwand 2b des Kanallenkers 2 befestigte Dichtungslippe 17 aus Gummi oder Kunststoff liegt am abgewinkelten Bereich 12c der benachbarten kurzen Seitenwand 12b des Formstücks 12 an und dichtet den Innenraum des Kanallenkers 2 in diesem Bereich gegenüber dem Innenraum des Formstücks 12 ab. Im Bereich der anderen kurzen Seitenwand 2b des Kanallenkers 2 ist die Abwinklung dadurch gebildet, dass die Kunststoffdichtung 9 an der Seitenwand 2b (und zwischen den Seitenwänden 2a) befestigt ist. Ihre aus Fig. 1 ersichtliche Krümmung entspricht ihrem radialen Abstand von der Drehachse 16, und die gleiche Krümmung weisen in diesem Bereich die langen Seitenwände 12b des Formstücks 12 auf. Zur Aussteifung sind dort Querstege 18 vorgesehen.

Die «vordere» Drehachse 19 des anderen Lenkers 3 ist ebenfalls am Formstück 12 vorgesehen; dessen kurze Seitenwand 12b ist in diesem Bereich zur Aufnahme des Zapfens 20 entsprechend verdickt. Der Lenker 3 ist – wie Fig. 1 verdeutlicht – an seinen Enden abgekröpft und taucht über den grössten Teil seiner Länge in die von den Stegen 6 des Kanallenkers 2 gebildete U-Schiene teilweise ein. Hierdurch wird in allen Höhenstellungen der Schutzhaube verhindert, dass ein versehentlich zwischen die Lenker gesteckter Finger einer Bedienungsperson gequetscht wird, wenn sich beim Hochstellen die Lenker 2, 3 einander nähern. Weiterhin wird der Raumbedarf der Lenkerführung verringert, ohne die für die Führungsgenauigkeit wichtigen Abstände zwischen den Drehachsen 4 und 5 sowie 16 und 19 zu verringern.

Mit der für die Aufnahme des Drehzapfens 20 vorgesehenen Verdickung der kurzen Seitenwand 12b des Formstückes 12 bildet eine entsprechende Verdickung 20 der anderen kurzen Seitenwand 12b eine flanschartige Aufnahme für einen entsprechend ausgebildeten Bund 21 am oberen Ende des Haubenkörpers 22. Dieser erweitert sich in üblicher Weise nach unten und trägt – in Schnittrichtung des nicht dargestellten Sägeblatts – an seinen äusseren Enden Rollen 23, deren in Fig. 1 strichpunktiert angegebene Verbindungstangente 24 die Aufstandsebene des Haubenkörpers 22 bestimmt.

## Patentansprüche

1. Bewegliche Schutzhaube für das angetrie- bene Werkzeug einer Werkzeugmaschine, insbe- sondere für das Sägeblatt einer Tischkreissäge, mit einer Viergelenk-Parallellenker-Führung für den Haubenkörper und einem Anschlussstutzen für die Späne-Absaugung, dadurch gekennzeichnet, dass ein Lenker (2) als Kanal ausgebildet und sein eines Ende an den Innenraum des Haubenkörpers (22) angeschlossen ist, während an seinem anderen Ende der Anschlussstutzen (8) angeordnet ist.

2. Schutzhaube nach Anspruch 1, dadurch gekennzeichnet, dass der Kanallenker (2) mittels eines Formstücks (12) am Haubenkörper (22) angeschlossen ist, welches mit diesem fest verbunden, aber am Kanallenker (2) um die eine Drehachse (16) des Viergelenks schwenkbar und abgedichtet gelagert ist.

3. Schutzhaube nach Anspruch 2, dadurch gekennzeichnet, dass der Kanallenker (2) und das Formstück (12) einen im wesentlichen flachrechteckigen Querschnitt haben, wobei die langen Rechteck-Seitenwände (2a, 12a) gegeneinander abdichten, während am Kanallenker (2) angesetzte Dichtungsstücke (9, 17) im Bereich der kurzen Rechteck-Seitenwände (2b) am Formstück (12) dichtend anliegen.

4. Schutzhaube nach Anspruch 2, dadurch gekennzeichnet, dass im hohlen Formstück (12) Leitstege (13) für die Absaugluft angeordnet sind.

5. Schutzhaube nach Anspruch 2, dadurch gekennzeichnet, dass am Formstück (12) auch der andere Lenker (3) drehbar gelagert ist.

6. Schutzhaube nach Anspruch 2, dadurch gekennzeichnet, dass der Haubenkörper (22) am Formstück (12) lösbar befestigt ist.

7. Schutzhaube nach Anspruch 1, dadurch gekennzeichnet, dass der Anschlussstutzen (8) Teil einer den Kanallenker (2) abschliessenden Kappe (7) ist.

## Revendications

1. Capot mobile de protection pour l'outil entraîné d'une machine-outil, notamment pour la lame de scie circulaire d'une scie circulaire sur table, avec un guidage à guides parallèles et à quadruple articulations pour le corps de capot et une tubulure de raccordement pour l'évacuation des copeaux par aspiration, caractérisé en ce qu'un guide (2) revêt la forme d'un canal et que l'une de ses extrémités est raccordée à l'espace interne du corps (22) du capot, tandis qu'à son autre extrémité est disposée la tubulure de raccordement (8).

2. Capot de protection selon la revendication 1, caractérisé en ce que le guide (2) en forme de canal est raccordé au corps (22) du capot au moyen d'une pièce de forme (12) laquelle est solidaire de ce corps de capot mais est montée sur le guide (2) en forme de canal de façon étanche et en étant susceptible de pivoter autour de l'un (16) des axes de rotation de la quadruple articulations.

3. Capot de protection selon la revendication 2, caractérisé en ce que le guide (2) en forme de canal et la pièce de forme (12) ont essentiellement une section transversale rectangulaire plate, les parois latérales longues (2a, 12a) du rectangle étant étanchées l'une par rapport à l'autre, tandis que des pièces d'étanchement (9, 17) placées sur le guide (2) en forme de canal au voisinage des parois latérales courtes (2b) du rectangle s'appliquent de façon étanche sur la pièce de forme (12).

4. Capot de protection selon la revendication 2, caractérisé en ce qu'il est prévu dans la pièce de forme creuse (12) des voiles de guidage (13) pour l'air aspiré.

5. Capot de protection selon la revendication 2, caractérisé en ce que l'autre guide (3) est également monté rotatif sur la pièce de forme (12).

6. Capot de protection selon la revendication 2, caractérisé en ce que le corps (22) du capot est fixé sur la pièce de forme (12) de façon amovible.

7. Capot de protection selon la revendication 1, caractérisé en ce que la tubulure de raccordement (8) fait partie d'un capuchon (7) fermant le guide (2) en forme de canal.

**Claims**

1. A movable protective hood for the driven tool of a machine tool, in particular for the saw blade of a circular-saw bench and having four-bar parallel-arm guidance for the hood body and a connector stub for the shaving suction, characterized in that one arm (2) is made as a channel and one end of it is connected to the interior of the hood body (22) whilst the connector stub (8) is arranged at the other end of it.

2. A protective hood as in Claim 1, characterized in that the channel arm (2) is connected to the hood body (22) by means of a shaped piece (12) which is connected rigidly to the latter but is supported on the channel arm (2) to be able to swing about one of the axes (16) of the four-bar chain and sealed with respect to the channel arm.

3. A protective hood as in Claim 2, characterized in that the channel arm (2) and the shaped piece (12) have an essentially flat rectangular cross-section, the long sidewalls (2a, 12a) of the rectangle being sealed with respect to one another, whilst sealing elements (9, 17) mounted on the channel arm (2) rest against the shaped piece (12) to make a seal in the region of the short sidewalls (2b).

4. A protective hood as in Claim 2, characterized in that guide webs (13) for the suction air are arranged in the hollow shaped piece (12).

5. A protective hood as in Claim 2, characterized in that the other arm (3) too is supported to rotate on the shaped piece (12).

6. A protective hood as in Claim 2, characterized in that the hood body (22) is fastened detachably to the shaped piece (12).

7. A protective hood as in Claim 1, characterized in that the connector stub (8) is part of a cap (7) which terminates the channel arm (2).

FIG. 1

FIG. 3

FIG. 2

0 048 331